# EUROPEAN PATENT APPLICATION

(11) **EP 4 841 745 A1**
(43) Date of publication of application: **18.11.2026**
(21) Application number: 24926906.9
(22) Date of filing: 23.12.2024
(51) Int. Cl.: H01M 10/42, H01M 50/519, H01M 50/507, H01M 50/502, H01M 50/569, H01M 50/59, H01M 10/48

(54) **INFORMATION ACQUISITION ASSEMBLY OF BATTERY CELL, BATTERY AND ELECTRIC DEVICE**

(30) Priority: 26.02.2024 CN 202410212243
(71) Applicant: Contemporary Amperex Technology Co., Limited, Ningde, Fujian 352100 (CN)
(72) Inventor: LIU, Shaozhong, Ningde, Fujian 352100 (CN); GAN, Weifeng, Ningde, Fujian 352100 (CN); ZHANG, Ming, Ningde, Fujian 352100 (CN); KANG, Hairong, Ningde, Fujian 352100 (CN); LI, Deshuo, Ningde, Fujian 352100 (CN)
(74) Representative: Lorenz Seidler Gossel Part. mbB
(86) International application number: PCT/CN2024/141560
(87) International publication number: WO 2025/180048

(57) **Abstract**

An information acquisition assembly (10) of a battery cell (20), a battery (100) and an electric device (1000). The information acquisition assembly (10) of the battery cell (20) comprises: an information sampling structure (1) and a mounting base film (2); the information sampling structure (1) is suitable for being connected to the battery cell (20) to acquire information parameters of the battery cell (20); the mounting base film (2) comprises a base film material and a thermosetting adhesive layer; the thermosetting adhesive layer and the base film material are stacked; and the information sampling structure (1) is arranged on the thermosetting adhesive layer.

## Description

### CROSS-REFERENCE TO RELATED APPLICATION

The present application is presented based on Chinese Patent Application No. 202410212243.5 filed on February 26, 2024, and claims the priority to the Chinese Patent Application described above, the content of which is incorporated herein by reference in its entirety.

### TECHNICAL FIELD

The present application relates to the technical field of batteries, and in particular, to an information acquisition assembly for a battery cell, a battery, and an electric device.

### BACKGROUND

In the related art, an acquisition assembly can be configured to acquire parameters of a battery cell. The film material of the acquisition assembly is generally integrated with a large-surfaced adhesive backing, and the adhesive backing remains tacky throughout its lifespan, allowing the film material to be connected to other components via the adhesive backing. However, during the production and manufacturing of the acquisition assembly, the adhesive backing is prone to attracting foreign matter such as particles. When the acquisition assembly is in use, the foreign matter adhered to the adhesive backing may easily detach and fall into the battery case, thereby posing a risk of failure of the sampling function of the acquisition assembly.

### SUMMARY

The present application aims to solve one of the technical problems in the related art, at least to a certain extent.

To this end, one objective of the present application is to provide an information acquisition assembly for a battery cell, which can reduce the risk of foreign matter detaching from a thermosetting adhesive layer and improve the reliability of the information acquisition assembly.

Another objective of the present application is to provide a battery.

Another objective of the present application is to provide an electric device.

In a first aspect, embodiments of the present application provide an information acquisition assembly for a battery cell, which includes: an information sampling structure, the information sampling structure being adapted to be connected to the battery cell to acquire an information parameter of the battery cell; and a mounting base film, the mounting base film including a base film material and a thermosetting adhesive layer, the thermosetting adhesive layer and the base film material being stacked, and the information sampling structure being disposed on the thermosetting adhesive layer.

In the above technical solutions, the thermosetting adhesive layer connects the base film material and the information sampling structure. During the assembly of the information acquisition assembly, the thermosetting adhesive becomes tacky when being heated, such that the information sampling structure is bonded to the base film material via the thermosetting adhesive. The thermosetting adhesive is cured into the thermosetting adhesive layer after being cooled, the thermosetting adhesive layer may provide a strong bond between the base film material and the information sampling structure, and the thermosetting adhesive layer has a certain degree of flexibility, such that the thermosetting adhesive layer can withstand a certain degree of tensile, shear, and tear forces, thereby maintaining the integrity of the bond. In addition, after the thermosetting adhesive is cured into the thermosetting adhesive layer, the thermosetting adhesive layer is less likely to attract foreign matter such as particles, and the foreign matter adhered to the thermosetting adhesive is cured together with the thermosetting adhesive, thereby reducing the risk of the foreign matter detaching from the thermosetting adhesive layer. This helps improve the reliability of the information acquisition assembly and reduce the risk of acquisition failure of the information sampling structure caused by the foreign matter falling into the battery.

In a second aspect, the embodiments of the present application further provide a battery, which includes: a battery cell; and an information acquisition assembly, the information acquisition assembly being the information acquisition assembly for the battery cell described above, and the information sampling structure being connected to the battery cell to acquire an information parameter of the battery cell.

In the above technical solutions, the thermosetting adhesive layer connects the base film material and the information sampling structure. During the assembly of the information acquisition assembly, the thermosetting adhesive becomes tacky when being heated, such that the information sampling structure is bonded to the base film material via the thermosetting adhesive. The thermosetting adhesive is cured into the thermosetting adhesive layer after being cooled, the thermosetting adhesive layer may provide a strong bond between the base film material and the information sampling structure, and the thermosetting adhesive layer has a certain degree of flexibility, such that the thermosetting adhesive layer can withstand a certain degree of tensile, shear, and tear forces, thereby maintaining the integrity of the bond. In addition, after the thermosetting adhesive is cured into the thermosetting adhesive layer, the thermosetting adhesive layer is less likely to attract foreign matter such as particles, and the foreign matter adhered to the thermosetting adhesive is cured together with the thermosetting adhesive, thereby reducing the risk of the foreign matter detaching from the thermosetting adhesive layer. This helps improve the reliability of the information acquisition assembly, reduce the risk of acquisition failure of the information sampling structure caused by the foreign matter falling into the battery, and improve the reliability of the battery.

In a third aspect, the embodiments of the present application further provide an electric device, which includes the above battery.

In the above technical solutions, the thermosetting adhesive layer connects the base film material and the information sampling structure. During the assembly of the information acquisition assembly, the thermosetting adhesive becomes tacky when being heated, such that the information sampling structure is bonded to the base film material via the thermosetting adhesive. The thermosetting adhesive is cured into the thermosetting adhesive layer after being cooled, the thermosetting adhesive layer may provide a strong bond between the base film material and the information sampling structure, and the thermosetting adhesive layer has a certain degree of flexibility, such that the thermosetting adhesive layer can withstand a certain degree of tensile, shear, and tear forces, thereby maintaining the integrity of the bond. In addition, after the thermosetting adhesive is cured into the thermosetting adhesive layer, the thermosetting adhesive layer is less likely to attract foreign matter such as particles, and the foreign matter adhered to the thermosetting adhesive is cured together with the thermosetting adhesive, thereby reducing the risk of the foreign matter detaching from the thermosetting adhesive layer. This helps improve the reliability of the information acquisition assembly, reduce the risk of acquisition failure of the information sampling structure caused by the foreign matter falling into the battery, improve the reliability of the battery, thereby improving the reliability of the electric device.

The additional aspects and the advantages of the present application will be partially provided in the following description, will partially become apparent from the following description, or will be learned through the practice of the present application.

### BRIEF DESCRIPTION OF THE DRAWINGS

FIG. 1 is a schematic view of an electric device according to an embodiment of the present application;
FIG. 2 is an exploded view of a battery according to an embodiment of the present application;
FIG. 3 is a schematic view of an information acquisition assembly and a battery cell according to an embodiment of the present application;
FIG. 4 is a schematic view of a mounting base film according to an embodiment of the present application;
FIG. 5 is a partial enlarged view of a mounting base film according to an embodiment of the present application;
FIG. 6 is a schematic view of an information acquisition assembly according to an embodiment of the present application;
FIG. 7 is a partial enlarged view of an information acquisition assembly according to an embodiment of the present application;
FIG. 8 is another partial enlarged view of a mounting base film according to an embodiment of the present application;
FIG. 9 is a schematic view of fitting of an electric connector, a voltage acquisition terminal, and a mounting base film according to an embodiment of the present application;
FIG. 10 is a schematic view of fitting of a sampling plate and an information acquisition terminal according to an embodiment of the present application;
FIG. 11 is a schematic view of fitting of a mounting base film and a voltage acquisition terminal according to an embodiment of the present application;
FIG. 12 is a schematic view of fitting of a voltage acquisition terminal and an electric connector according to an embodiment of the present application; and
FIG. 13 is a schematic view of fitting of a temperature acquisition terminal, an electric connector, a heat conduction pad, and a battery cell according to an embodiment of the present application.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the above terms in the present application can be understood according to specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not be construed as limiting the present application in any way.

The term "plurality of" used in the present application refers to no less than two (including two).

In the embodiments of the present application, the battery cell may be a secondary battery. The secondary battery refers to a battery cell that can be reused by activating the active material through charging after the battery cell is discharged. The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present application.

The battery mentioned in the embodiments of the present application refers to a single physical module including one or a plurality of battery cells to provide higher voltage and capacity. When there are a plurality of battery cells, the plurality of battery cells are connected in series, in parallel, or in series-parallel by a busbar component.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a part of the chassis structure of the vehicle. In some examples, a part of the case may become at least a part of the floor of the vehicle, or a part of the case may become at least a part of a crossbeam and a longitudinal beam of the vehicle.

In some embodiments, the battery may be an energy storage device. The energy storage device includes an energy storage container, an energy storage electrical cabinet, and the like.

Battery technology advancement requires consideration of various design factors at the same time, such as energy density, cycle life, discharge capacity, charging and discharging rate, and other performance parameters. In addition, the safety performance of the battery also needs to be considered.

The inventors have found that in the technical field of batteries, an acquisition assembly can be configured to acquire parameters of a battery cell. The film material of the acquisition assembly is generally integrated with a large-surfaced adhesive backing, and the adhesive backing remains tacky throughout its lifespan, allowing the film material to be connected to other components via the adhesive backing. However, during the production and manufacturing of the acquisition assembly, the adhesive backing is prone to attracting foreign matter such as particles. When the acquisition assembly is in use, the foreign matter adhered to the adhesive backing may easily detach and fall into the battery case, thereby posing a risk of failure of the sampling function of the acquisition assembly.

In view of this, the embodiments of the present application provide an information acquisition assembly for a battery cell. The information acquisition assembly includes: an information sampling structure and a mounting base film. The information sampling structure is adapted to be connected to the battery cell to acquire an information parameter of the battery cell. The mounting base film includes a base film material and a thermosetting adhesive layer, the thermosetting adhesive layer and the base film material are stacked, and the information sampling structure is disposed on the thermosetting adhesive layer.

In the information acquisition assembly of such a battery cell, the thermosetting adhesive layer may be formed by curing thermosetting adhesive. During the assembly of the information acquisition assembly, the thermosetting adhesive is tacky, such that the information sampling structure is bonded to the base film material via the thermosetting adhesive. The thermosetting adhesive is cured into a thermosetting adhesive layer after being cooled, the thermosetting adhesive layer is less likely to attract foreign matter such as particles, and the foreign matter adhered to the thermosetting adhesive is cured together with the thermosetting adhesive, thereby reducing the risk of the foreign matter detaching from the thermosetting adhesive layer. This helps improve the reliability of the information acquisition assembly and reduce the risk of acquisition failure of the information sampling structure caused by the foreign matter falling into the battery.

The technical solutions described in the embodiments of the present application are applicable to batteries and electric devices using batteries.

The electric device may be a vehicle, a mobile phone, a portable device, a laptop computer, a ship, a spacecraft, an electric toy, an electric tool, or the like. The vehicle may be a fuel vehicle, a gas vehicle, or a new energy vehicle, and the new energy vehicle may be a pure electric vehicle, a hybrid vehicle, an extended-range vehicle, or the like; the spacecraft includes an airplane, a rocket, a space shuttle, a spaceship, and the like; the electric toy includes a stationary or mobile electric toy, and in some examples, the electric toy may be a game console, an electric car toy, an electric ship toy, an electric airplane toy, or the like; the electric tool includes an electric metal cutting tool, an electric grinding tool, an electric assembling tool, and an electric tool for railways, and in some examples, the electric tool may be an electric drill, an electric grinder, an electric wrench, an electric screwdriver, an electric hammer, an electric impact drill, a concrete vibrator, an electric planer, or the like. The electric devices described above are not specially limited in the embodiments of the present application.

For ease of explanation, the following embodiments will be described by taking a vehicle as an example of the electric device.

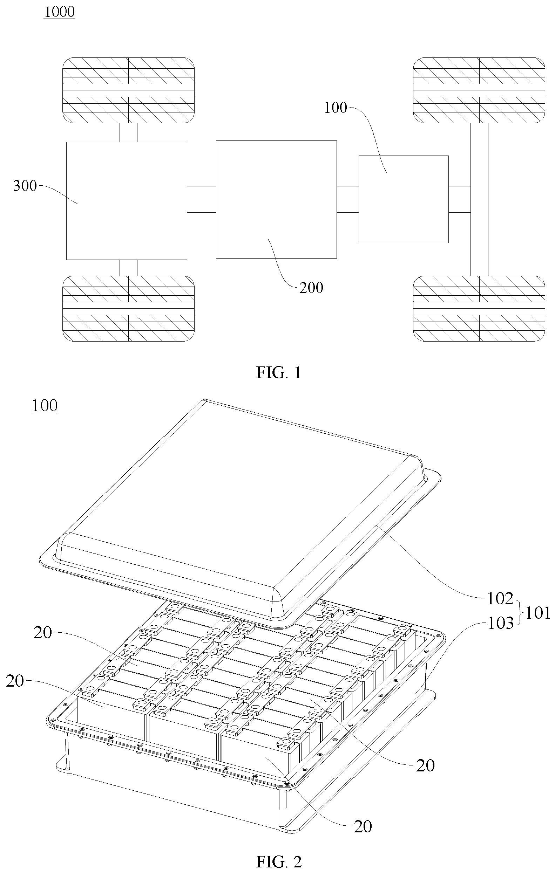

Referring to FIG. 1, FIG. 1 is a schematic structural diagram of a vehicle according to some embodiments of the present application. A battery 100 is disposed inside the vehicle, and the battery 100 may be disposed at the bottom, head, or rear of the vehicle. The battery 100 may be configured to supply power to the vehicle. In some examples, the battery 100 may serve as an operation power source for the vehicle.

The vehicle may further include a controller 200 and a motor 300. The controller 200 is configured to control the battery 100 to supply power to the motor 300 for, in some examples, operation power needed by the vehicle for start-up, navigation, and driving.

In some embodiments of the present application, the battery 100 may not only serve as the operation power source for the vehicle, but also as a driving power source for the vehicle to, instead of or in part instead of petrol or diesel or natural gas, provide driving power for the vehicle.

Referring to FIG. 2, FIG. 2 is an exploded view of a battery 100 according to some embodiments of the present application. The battery 100 includes a battery cell 20, a case 101, and an information acquisition assembly 10. The case 101 is configured to accommodate the battery cell 20 and the information acquisition assembly 10. The information acquisition assembly 10 is not shown in FIG. 2.

The case 101 is a component for accommodating the battery cell 20, the case 101 provides a placement space for the battery cell 20, and the case 101 may be of various structures. In some embodiments, the case 101 may include a first case body 102 and a second case body 103. The first case body 102 and the second case body 103 are mutually lidded with each other to define a placement space for accommodating the battery cell 20. The first case body 102 and the second case body 103 may be in various shapes, such as a rectangular parallelepiped and a cylinder. The first case body 102 may be of a hollow structure with one side open, the second case body 103 may also be of a hollow structure with one side open, and the open side of the first case body 102 is lidded with the open side of the second case body 103 to form the case 101 having a placement space. Alternatively, the first case body 102 may be of a hollow structure with one side open, the second case body 103 may be of a plate-shaped structure, and the open side of the first case body 102 is lidded with the second case body 103 to form the case 101 having a placement space. The battery cell 20 may include one or a plurality of cells. As an example, the battery cell 20 may be a cylindrical battery cell, a prismatic battery cell, a pouch battery cell, or a battery cell of other shapes. The prismatic battery cell includes a square-shell battery cell, a blade-shaped battery cell, and a polygonal prismatic battery, and the polygonal prismatic battery cell may be, for example, a hexagonal prismatic battery cell. This is not particularly limited in the present application.

In the battery 100, one or a plurality of battery cells 20 may be provided. If a plurality of battery cells 20 are provided, the plurality of battery cells 20 may be connected in series, in parallel, or in series-parallel. The series-parallel connection means that both series connection and parallel connection are present in the connection of the plurality of battery cells 20. The situation may be that the plurality of battery cells 20 are first connected in series, in parallel, or in series-parallel to form battery modules, and then the plurality of battery modules are connected in series, in parallel, or in series-parallel to form a whole to be accommodated in the case 101. Alternatively, all the battery cells 20 may be directly connected in series, in parallel, or in series-parallel, and then the whole formed by all the battery cells 20 is accommodated in the case 101.

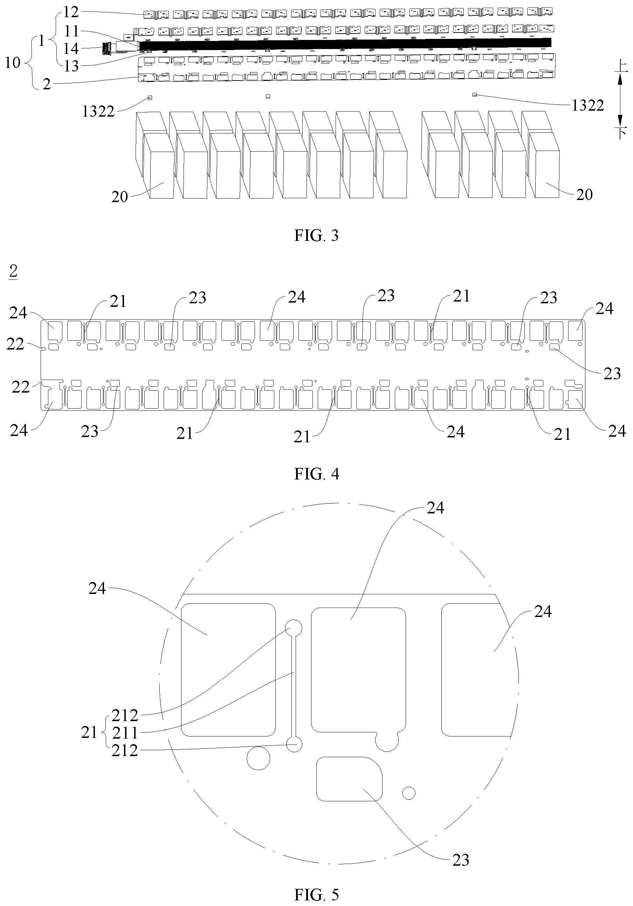

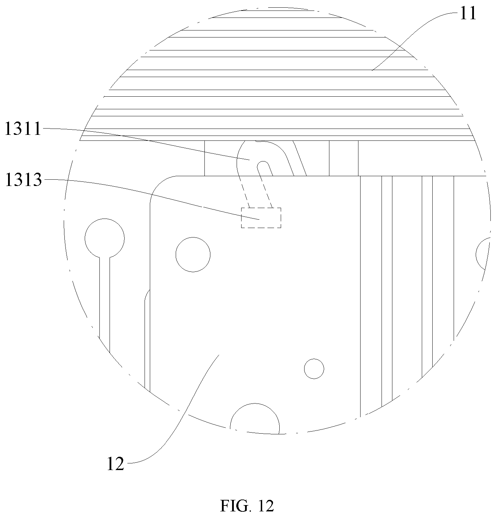

The information acquisition assembly 10 of the battery cell 20 according to the embodiments of the present application is described below with reference to FIGs. 3 to 13.

According to some embodiments of the present application, referring to FIG. 3, the information acquisition assembly 10 of the battery cell 20 includes: an information sampling structure 1 and a mounting base film 2. The information sampling structure 1 is adapted to be connected to the battery cell 20 to acquire an information parameter of the battery cell 20. The mounting base film 2 includes a base film material and a thermosetting adhesive layer, the thermosetting adhesive layer and the base film material are stacked, and the information sampling structure 1 is disposed on the thermosetting adhesive layer.

The information parameter of the battery cell 20 acquired by the information sampling structure 1 may include parameters such as voltage and temperature. The information sampling structure 1 may be electrically connected to the battery cell 20 to acquire voltage parameters of the battery cell 20. The information sampling structure 1 may be in heat conducting connection with the battery cell 20 to acquire temperature parameters of the battery cell 20. The information parameter of the battery cell 20 may be acquired in real time by the information sampling structure 1 to monitor the state of the battery cell 20. The mounting base film 2 includes the base film material and the thermosetting adhesive layer. The base film material may be a polyester film (PET film) or a blue film. The thermosetting adhesive layer may be formed by curing thermosetting adhesive. The thermosetting adhesive may be heated and then sprayed or applied on the surface of the base film material. Alternatively, the thermosetting adhesive is applied on the surface of the base film material and then heated to a tacky molten state. The thermosetting adhesive layer formed after the thermosetting adhesive is cooled and cured may bond the information sampling structure 1 and the base film material into an integral unit. The information acquisition assembly 10 may be mounted on the battery cell 20, and a side, facing away from the thermosetting adhesive layer, of the base film material faces the battery cell 20.

In the above technical solutions, the thermosetting adhesive layer connects the base film material and the information sampling structure 1. The thermosetting adhesive may be a non-tacky solid at room temperature. During the assembly of the information acquisition assembly 10, the thermosetting adhesive is heated to 110 °C to 130 °C, and then the thermosetting adhesive enters a molten state and becomes tacky, such that the information sampling structure 1 is bonded to the base film material via the thermosetting adhesive. The thermosetting adhesive is cured into the thermosetting adhesive layer after being cooled, the thermosetting adhesive layer may provide a strong bond between the base film material and the information sampling structure 1, and the thermosetting adhesive layer has a certain degree of flexibility, such that the thermosetting adhesive layer can withstand a certain degree of tensile, shear, and tear forces, thereby maintaining the integrity of the bond. In addition, after the thermosetting adhesive is cured into the thermosetting adhesive layer, the thermosetting adhesive layer is less likely to attract foreign matter such as particles, and the foreign matter adhered to the thermosetting adhesive is cured together with the thermosetting adhesive, thereby reducing the risk of the foreign matter detaching from the thermosetting adhesive layer. This helps improve the reliability of the information acquisition assembly 10 and reduce the risk of acquisition failure of the information sampling structure 1 caused by the foreign matter falling into the battery 100.

According to some embodiments of the present application, referring to FIGs. 3 to 5, the mounting base film 2 is provided with hollow-through holes 21, and each hollow-through hole 21 extends through the mounting base film 2 in a stacking direction of the thermosetting adhesive layer and the base film material.

The stacking direction of the thermosetting adhesive layer and the base film material may be a thickness direction of the mounting base film 2, that is, an upper-lower direction in FIG. 3. The hollow-through hole 21 may extend through the mounting base film 2 in the thickness direction of the mounting base film 2. That is, the hollow-through hole 21 extends through both the base film material and the thermosetting adhesive layer, and the shape of the thermosetting adhesive layer conforms to the shape of the base film material.

In the above technical solutions, the mounting base film 2 is provided with the hollow-through holes 21. The stiffness of the mounting base film 2 is reduced at the hollow-through hole 21, thereby providing a certain amount of buffer deformation space. During the expansion or contraction of the volume of the battery cell 20 below the mounting base film 2, the mounting base film 2 is subjected to compressive or tensile forces exerted by the battery cell 20. In this case, the mounting base film 2 can deform at the hollow-through hole 21, such that the deformation at the hollow-through hole 21 buffers and absorbs acting forces exerted by the battery cell 20 on the mounting base film 2, thereby reducing the risk of tearing the mounting base film 2. This helps improve the reliability and durability of the mounting base film 2 and prolong the service life of the mounting base film.

According to some embodiments of the present application, referring to FIG. 4, a plurality of hollow-through holes 21 are provided, and the plurality of hollow-through holes 21 are located at different positions of the mounting base film 2, respectively.

There may be a plurality of hollow-through holes 21. In some examples, there may be 2 hollow-through holes, 5 hollow-through holes, 8 hollow-through holes, 12 hollow-through holes, or the like. The number of the hollow-through holes 21 may be positively correlated with a projection area of the mounting base film 2 in the thickness direction of the mounting base film. That is, the larger the projection area of the mounting base film 2 in the thickness direction of the mounting base film, the greater the number of the hollow-through holes 21. The plurality of the hollow-through holes 21 are located at different positions of the mounting base film 2, respectively, to enhance the tear resistance of the mounting base film 2 at different positions. The plurality of the hollow-through holes 21 may be evenly distributed on the mounting base film 2 to reduce the risk of local tearing of the mounting base film 2.

In the above technical solutions, the mounting base film 2 is provided with the plurality of hollow-through holes 21 located at different positions, such that the mounting base film 2 can buffer and absorb, through the corresponding hollow-through holes 21 at the different positions, the acting forces exerted by the battery cell 20 on the mounting base film 2, thereby reducing the stress inside the mounting base film 2. This helps reduce the risk of tearing the mounting base film 2.

According to some embodiments of the present application, referring to FIG. 5, the hollow-through hole 21 is configured as a strip-shaped structure.

A projection of the hollow-through hole 21 in the stacking direction of the thermosetting adhesive layer and the base film material may be strip-shaped. The hollow-through hole 21 of the strip-shaped structure occupies little space, facilitates processing on the mounting base film 2, and is convenient for arrangement. The hollow-through hole 21 may include a rectangular segment 211. The rectangular segment 211 is of an elongated strip-shaped structure. The hollow-through hole 21 may further include two circular segments 212. Two ends of the rectangular segment 211 in a length direction are separately connected to one circular segment 212. The diameter of the circular segment 212 may be greater than the width of the rectangular segment 211. The rectangular segment 211 facilitates processing and arrangement. The circular segment 212 can better buffer and absorb the acting forces exerted by the battery cell 20 on the mounting base film 2 in various directions.

In the above technical solutions, the hollow-through hole 21 is configured as the strip-shaped structure. The hollow-through hole 21 is easy to process on the mounting base film 2, facilitating the arrangement. When the mounting base film 2 is subjected to acting forces exerted by the deformation of the battery cell 20, the mounting base film 2 can deform at the hollow-through hole 21, such that the deformation at the hollow-through hole 21 buffers and absorbs the acting forces exerted by the battery cell 20 on the mounting base film 2, thereby reducing the risk of tearing the mounting base film 2.

According to some embodiments of the present application, referring to FIGs. 3, 6, and 7, the information sampling structure 1 includes: a sampling plate 11, an electric connector 12, and an information acquisition terminal 13, the sampling plate 11 is disposed on the thermosetting adhesive layer, the sampling plate 11 and the electric connector 12 are located on the same side of the mounting base film 2, the electric connector 12 is configured to electrically connect two battery cells 20, and the information acquisition terminal 13 is connected between the sampling plate 11 and the electric connector 12.

The sampling plate 11 is fixedly connected to the thermosetting adhesive layer. The sampling plate 11 and the electric connector 12 may be located on a side, facing away from the battery cell 20, of the mounting base film 2. The electric connector 12 may be a conductive member such as an aluminum bar or a copper busbar. The electric connector 12 may be configured to electrically connect the two battery cells 20, such that the two battery cells 20 are connected in series or in parallel via the electric connector 12. The information acquisition terminal 13 is connected between the sampling plate 11 and the electric connector 12. The information acquisition terminal 13 may acquire information parameters of the battery cells 20 via the electric connector 12 and transmit the information parameters to the sampling plate 11. The sampling plate 11 may be an FCC sampling plate. The sampling plate 11 may transmit information of the battery cells 20 to the control system of the battery 100, to monitor the status of the battery cells 20.

In the above technical solutions, the sampling plate 11 can acquire the information parameters of the battery cells 20 via the information acquisition terminal 13, so as to monitor the status of the battery cells 20. The sampling plate 11 and the electric connector 12 are located on the same side of the mounting base film 2, thereby allowing the information acquisition terminal 13 to be connected to the sampling plate 11 and the electric connector 12. The sampling plate 11 is connected to the base film material via the thermosetting adhesive layer, the electric connector 12 is electrically connected to the two battery cells 20, the information acquisition terminal 13 is connected between the sampling plate 11 and the electric connector 12, and components in the information sampling structure 1 are connected to each other, such that a relatively stable structure can be maintained under complex operating conditions such as vibration, resulting in high reliability.

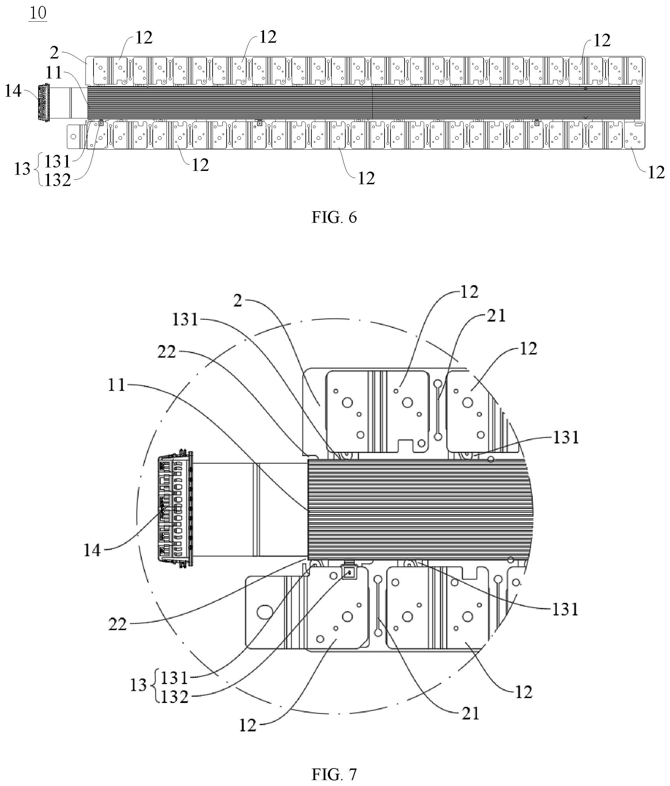

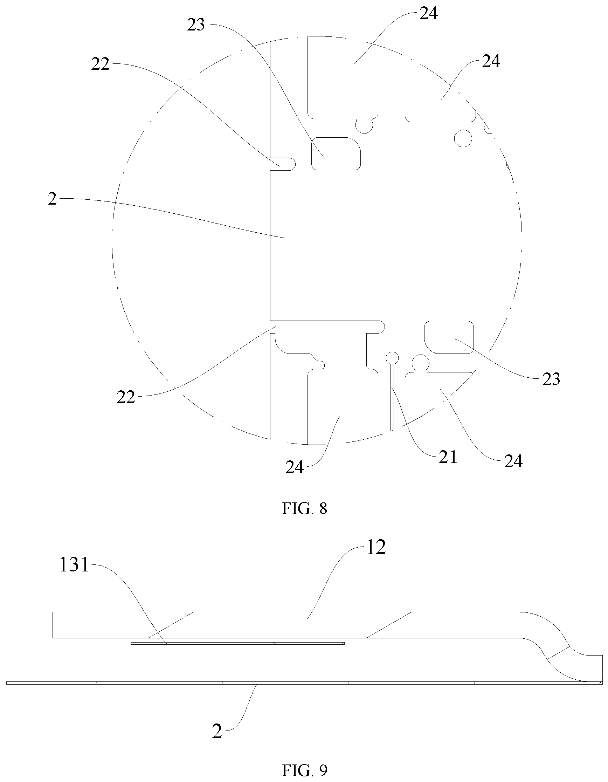

According to some embodiments of the present application, referring to FIGs. 7 and 8, a notch structure 22 is formed at an edge of the mounting base film 2, and the notch structure 22 corresponds to an edge of the sampling plate 11.

During the mounting or during the use in a vibration environment of the information acquisition assembly 10, the notch structure 22 is formed at the edge of the mounting base film 2 to provide clearance for the sampling plate 11, thereby reducing the risk of the sampling plate 11 being cut by the mounting base film 2. Specifically, a part of the sampling plate 11 may extend out of the outer side of the mounting base film 2. If no notch structure 22 is formed at the edge of the mounting base film 2, during the mounting or during the use in the vibration environment of the information acquisition assembly 10, the part of the sampling plate 11 extending out of the mounting base film 2 is prone to wobbling, resulting in a risk of an edge position of the mounting base film 2 cutting an edge position of the sampling plate 11. In the present application, the notch structure 22 is formed at the edge of the mounting base film 2, such that the mounting base film 2 provides clearance for the sampling plate 11 and the corresponding edge position of the sampling plate. The notch structure 22 may be a semicircular or elongated strip-shaped notch formed at the edge of the mounting base film 2, to reduce the risk of the sampling plate 11 being cut at the notch structure 22.

In the above technical solutions, the notch structure 22 on the mounting base film 2 can provide clearance for the edge position of the sampling plate 11. When a position at which the sampling plate 11 extends out of the mounting base film 2 wobbles, the notch structure 22 can reduce the risk of the sampling plate 11 being cut by the mounting base film 2, thereby helping improve the reliability of the sampling plate 11 and reduce the risk of sampling failure caused by the sampling plate 11 being cut by the mounting base film 2.

According to some embodiments of the present application, referring to FIGs. 7, 9 and 10, the information acquisition terminal 13 includes: a voltage acquisition terminal 131, the voltage acquisition terminal 131 is fixedly connected to the sampling plate 11, and the voltage acquisition terminal 131 is fixedly connected to a surface, facing the mounting base film 2, of the electric connector 12.

The voltage acquisition terminal 131 may be electrically connected to the battery cell 20 via the electric connector 12, such that the voltage acquisition terminal 131 acquires the voltage of the battery cell 20 and transmits the voltage to the sampling plate 11 connected to the voltage acquisition terminal. The voltage acquisition terminal 131 and the surface, facing the mounting base film 2, of the electric connector 12 may be fixedly connected by welding, a snap-fit connection, or the like. That is, at a fixed connection interface between the voltage acquisition terminal 131 and the electric connector 12, the voltage acquisition terminal 131 is located between the electric connector 12 and the mounting base film 2. More specifically, the fixed connection interface between the voltage acquisition terminal 131 and the electric connector 12 is located between the electric connector 12 and the thermosetting adhesive layer. During the assembly of the information acquisition assembly 10, the sampling plate 11 and the voltage acquisition terminal 131 may be connected together to an uncured thermosetting adhesive layer. After the thermosetting adhesive layer is cured, the thermosetting adhesive layer can fix and seal the voltage acquisition terminal 131.

In the above technical solutions, the fixed connection interface between the voltage acquisition terminal 131 and the electric connector 12 is located between the electric connector 12 and the thermosetting adhesive layer. After the thermosetting adhesive layer is cured, the thermosetting adhesive layer can fix the voltage acquisition terminal 131, to reduce the risk of the voltage acquisition terminal 131 wobbling, thereby helping improve the reliability and stability of the connection between the voltage acquisition terminal 131 and the electric connector 12. In addition, after the thermosetting adhesive layer is cured, the connection interface between the voltage acquisition terminal 131 and the electric connector 12 can be sealed, thereby achieving an effect equivalent to dispensing adhesive. The thermosetting adhesive layer can prevent substances such as external air and water from contacting the connection interface between the voltage acquisition terminal 131 and the electric connector 12, thereby reducing the risk of corrosion at the connection interface between the voltage acquisition terminal 131 and the electric connector 12. That is, the connection interface between the voltage acquisition terminal 131 and the electric connector 12 does not require an adhesive dispensing process, thereby helping simplify the production process of the information acquisition assembly 10 and reduce the manufacturing and assembly costs of the information acquisition assembly 10.

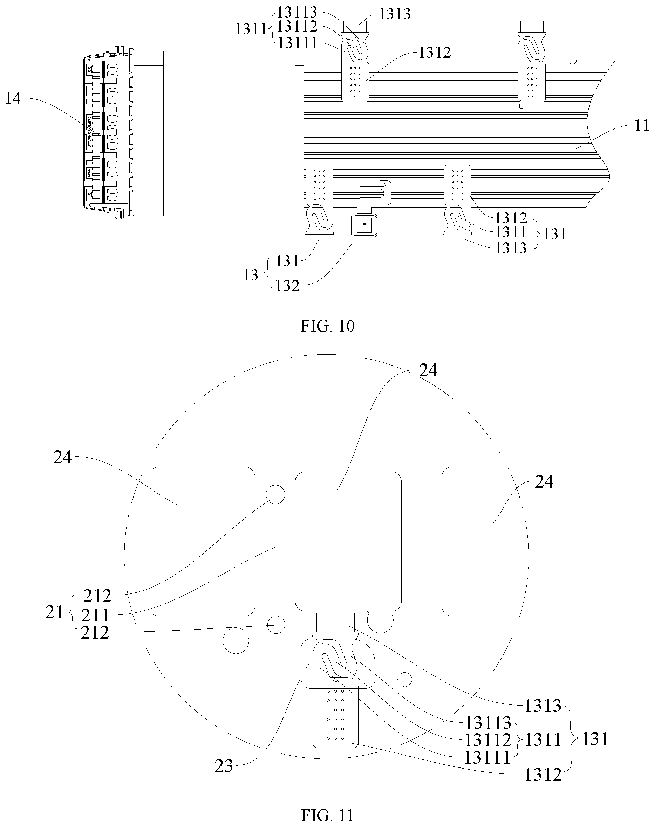

According to some embodiments of the present application, referring to FIGs. 7 and 10, the voltage acquisition terminal 131 is fixedly connected to a surface, facing the mounting base film 2, of the sampling plate 11.

The voltage acquisition terminal 131 and the surface, facing the mounting base film 2, of the sampling plate 11 may be fixedly connected by welding, a snap-fit connection, or the like. That is, at a fixed connection interface between the voltage acquisition terminal 131 and the sampling plate 11, the voltage acquisition terminal 131 is located between the sampling plate 11 and the mounting base film 2. More specifically, the fixed connection interface between the voltage acquisition terminal 131 and the sampling plate 11 is located between the sampling plate 11 and the thermosetting adhesive layer. During the assembly of the information acquisition assembly 10, the sampling plate 11 and the voltage acquisition terminal 131 may be connected together to an uncured thermosetting adhesive layer. After the thermosetting adhesive layer is cured, the thermosetting adhesive layer can fix and seal the voltage acquisition terminal 131.

In the above technical solutions, the fixed connection interface between the voltage acquisition terminal 131 and the sampling plate 11 is located between the sampling plate 11 and the thermosetting adhesive layer. After the thermosetting adhesive layer is cured, the thermosetting adhesive layer can fix the voltage acquisition terminal 131, to reduce the risk of the voltage acquisition terminal 131 wobbling, thereby helping improve the reliability and stability of the connection between the voltage acquisition terminal 131 and the sampling plate 11. In addition, after the thermosetting adhesive layer is cured, the connection interface between the voltage acquisition terminal 131 and the sampling plate 11 can be sealed, thereby achieving an effect equivalent to dispensing adhesive. The thermosetting adhesive layer can prevent substances such as external air and water from contacting the connection interface between the voltage acquisition terminal 131 and the sampling plate 11, thereby reducing the risk of corrosion at the connection interface between the voltage acquisition terminal 131 and the sampling plate 11. That is, the connection interface between the voltage acquisition terminal 131 and the sampling plate 11 does not require an adhesive dispensing process, thereby helping simplify the production process of the information acquisition assembly 10 and reduce the manufacturing and assembly costs of the information acquisition assembly 10.

According to some embodiments of the present application, referring to FIGs. 10 and 11, the voltage acquisition terminal 131 is provided with a deformable segment 1311, the mounting base film 2 is provided with a first clearance hole 23, the first clearance hole 23 extends through the mounting base film 2 in the stacking direction of the thermosetting adhesive layer and the base film material, and the first clearance hole 23 and the deformable segment 1311 are correspondingly disposed.

The deformable segment 1311 of the voltage acquisition terminal 131 may be a telescopic elastic deformation structure. In some examples, the deformable segment 1311 is of an S-shaped structure, the first clearance hole 23 may extend through the mounting base film 2 in the thickness direction of the mounting base film 2, the first clearance hole 23 and the deformable segment 1311 are correspondingly disposed, and an orthographic projection of the deformable segment 1311 onto the mounting base film 2 may be located in the first clearance hole 23. Since no thermosetting adhesive layer is provided at the first clearance hole 23, the deformable segment 1311 of the voltage acquisition terminal 131 may move relative to the mounting base film 2. When the voltage acquisition terminal 131 is subjected to an external force, the deformable segment 1311 of the voltage acquisition terminal 131 may be extended or shortened to buffer and absorb the external force.

In the above technical solutions, the voltage acquisition terminal 131 is provided with the deformable segment 1311, and the mounting base film 2 is provided with the first clearance hole 23 corresponding to the deformable segment 1311, such that the thermosetting adhesive layer on the mounting base film 2 can be separated from the deformable segment 1311. The deformable segment 1311 of the voltage acquisition terminal 131 can move relative to the mounting base film 2. When the voltage acquisition terminal 131 is subjected to an external force, the deformable segment 1311 of the voltage acquisition terminal 131 can be extended or shortened to buffer and absorb the external force.

According to some embodiments of the present application, referring to FIGs. 10 to 12, the voltage acquisition terminal 131 is further provided with a first fixing part 1312 and a second fixing part 1313, the first fixing part 1312 is fixedly connected to the sampling plate 11, the second fixing part 1313 is fixedly connected to the electric connector 12, and the deformable segment 1311 is connected between the first fixing part 1312 and the second fixing part 1313.

The first fixing part 1312 and the sampling plate 11 may be fixedly connected by welding, a snap-fit connection, or the like, and the second fixing part 1313 and the electric connector 12 may be fixedly connected by welding, a snap-fit connection, or the like. The deformable segment 1311 may undergo elastic deformation when subjected to a force, to change the distance between the first fixing part 1312 and the second fixing part 1313, and provide a buffering and energy-absorbing function.

In the above technical solutions, the first fixing part 1312 is fixedly connected to the sampling plate 11, the second fixing part 1313 is fixedly connected to the electric connector 12, and the deformable segment 1311 is connected between the first fixing part 1312 and the second fixing part 1313. When the battery cell 20 expands or contracts, causing relative displacement between the sampling plate 11 and the electric connector 12, the distance between the first fixing part 1312 and the second fixing part 1313 also changes accordingly. In this case, the deformable segment 1311 can undergo elastic deformation between the first fixing part 1312 and the second fixing part 1313 to compensate for changes in the distance between the first fixing part 1312 and the second fixing part 1313. That is, when the distance between the first fixing part 1312 and the second fixing part 1313 decreases, the deformable segment 1311 is compressed and its length is reduced; and when the distance between the first fixing part 1312 and the second fixing part 1313 increases, the deformable segment 1311 is stretched and its length is increased. This helps reduce the stress at a fixed connection interface between the first fixing part 1312 and the sampling plate 11, and reduce the risk of failure of the fixed connection between the voltage acquisition terminal 131 and the sampling plate 11. In addition, this also helps reduce the stress at a fixed connection interface between the second fixing part 1313 and the electric connector 12 and reduce the risk of failure of the fixed connection between the voltage acquisition terminal 131 and the electric connector 12, thereby helping improve the reliability and stability of the voltage acquisition terminal 131.

According to some embodiments of the present application, referring to FIGs. 10 and 11, the deformable segment 1311 includes: a first segment body 13111, a second segment body 13112, and a third segment body 13113, two ends of the second segment body 13112 are connected to the first segment body 13111 and the third segment body 13113, respectively, the first segment body 13111 is connected between the first fixing part 1312 and the second segment body 13112, the third segment body 13113 is connected between the second fixing part 1313 and the second segment body 13112, and at least two of the first segment body 13111, the second segment body 13112, and the third segment body 13113 are parallel to each other.

The first segment body 13111, the second segment body 13112, and the third segment body 13113 of the deformable segment 1311 are connected in sequence. The first segment body 13111 and the second segment body 13112 may be parallel to each other, or the first segment body 13111 and the third segment body 13113 are parallel to each other, or the first segment body 13111, the second segment body 13112, and the third segment body 13113 are parallel to one another. When relative displacement occurs between the sampling plate 11 and the electric connector 12, the first fixing part 1312 and the first segment body 13111 may move synchronously with the sampling plate 11, and the second fixing part 1313 and the second segment body 13112 may move synchronously with the electric connector 12. Under the action of the first segment body 13111 and the second segment body 13112, elastic deformation occurs at a connection interface between the second segment body 13112 and the first segment body 13111, such that an included angle is formed between the second segment body 13112 and the first segment body 13111 parallel to each other, or an included angle between the second segment body 13112 connected to the first segment body 13111 at the included angle changes. In addition, elastic deformation occurs at a connection interface between the second segment body 13112 and the third segment body 13113, such that an included angle is formed between the second segment body 13112 and the third segment body 13113 parallel to each other, or an included angle between the second segment body 13112 connected to the third segment body 13113 at the included angle changes, thereby enabling the telescopic motion of the deformable segment 1311.

In the above technical solutions, the deformable segment 1311 includes the first segment body 13111, the second segment body 13112, and the third segment body 13113 connected in sequence. At least two of the first segment body 13111, the second segment body 13112, and the third segment body 13113 are parallel to each other. When relative displacement occurs between the sampling plate 11 and the electric connector 12, elastic deformation occurs at the connection interface between the second segment body 13112 and the first segment body 13111, and elastic deformation occurs at the connection interface between the second segment body 13112 and the third segment body 13113, such that the deformable segment 1311 telescopically moves to compensate for the changes in the distance between the first fixing part 1312 and the second fixing part 1313, to reduce the stress at the fixed connection interface between the first fixing part 1312 and the sampling plate 11, and reduce the risk of failure of the fixed connection between the voltage acquisition terminal 131 and the sampling plate 11. In addition, this also helps reduce the stress at the fixed connection interface between the second fixing part 1313 and the electric connector 12 and reduce the risk of failure of the fixed connection between the voltage acquisition terminal 131 and the electric connector 12, thereby helping improve the reliability and stability of the voltage acquisition terminal 131.

According to some embodiments of the present application, the deformable segment 1311 includes: the first segment body 13111, the second segment body 13112, and the third segment body 13113, the two ends of the second segment body 13112 are connected to the first segment body 13111 and the third segment body 13113, respectively, the first segment body 13111 is connected between the first fixing part 1312 and the second segment body 13112, the third segment body 13113 is connected between the second fixing part 1313 and the second segment body 13112, an included angle is formed between the second segment body 13112 and the first segment body 13111, and/or an included angle is formed between the second segment body 13112 and the third segment body 13113.

The first segment body 13111, the second segment body 13112, and the third segment body 13113 of the deformable segment 1311 are connected in sequence. An included angle is formed between the second segment body 13112 and the first segment body 13111, or an included angle is formed between the second segment body 13112 and the third segment body 13113, or an included angle is formed between the second segment body 13112 and each of the first segment body 13111 and the third segment body 13113. When relative displacement occurs between the sampling plate 11 and the electric connector 12, the first fixing part 1312 and the first segment body 13111 may move synchronously with the sampling plate 11, and the second fixing part 1313 and the second segment body 13112 may move synchronously with the electric connector 12. Under the action of the first segment body 13111 and the second segment body 13112, elastic deformation occurs at the connection interface between the second segment body 13112 and the first segment body 13111, such that the included angle is formed between the second segment body 13112 and the first segment body 13111 parallel to each other, or the included angle between the second segment body 13112 connected to the first segment body 13111 at the included angle changes. In addition, elastic deformation occurs at the connection interface between the second segment body 13112 and the third segment body 13113, such that the included angle is formed between the second segment body 13112 and the third segment body 13113 parallel to each other, or the included angle between the second segment body 13112 connected to the third segment body 13113 at the included angle changes, thereby enabling the telescopic motion of the deformable segment 1311.

In the above technical solutions, the deformable segment 1311 includes the first segment body 13111, the second segment body 13112, and the third segment body 13113 connected in sequence. The included angle is formed between the second segment body 13112 and the first segment body 13111, and/or the included angle is formed between the second segment body 13112 and the third segment body 13113. When relative displacement occurs between the sampling plate 11 and the electric connector 12, elastic deformation occurs at the connection interface between the second segment body 13112 and the first segment body 13111, and elastic deformation occurs at the connection interface between the second segment body 13112 and the third segment body 13113, such that the deformable segment 1311 telescopically moves to compensate for the changes in the distance between the first fixing part 1312 and the second fixing part 1313, to reduce the stress at the fixed connection interface between the first fixing part 1312 and the sampling plate 11, and reduce the risk of failure of the fixed connection between the voltage acquisition terminal 131 and the sampling plate 11. In addition, this also helps reduce the stress at the fixed connection interface between the second fixing part 1313 and the electric connector 12 and reduce the risk of failure of the fixed connection between the voltage acquisition terminal 131 and the electric connector 12, thereby helping improve the reliability and stability of the voltage acquisition terminal 131.

According to some embodiments of the present application, referring to FIGs. 7 and 10, the information acquisition terminal 13 includes: a temperature acquisition terminal 132, the temperature acquisition terminal 132 is fixedly connected to both the sampling plate 11 and the electric connector 12, the temperature acquisition terminal 132 is configured to acquire a temperature of the battery cell 20, and a protective layer is provided at a connection interface between the temperature acquisition terminal 132 and the sampling plate 11.

The temperature acquisition terminal 132 may be in heat conducting connection with the battery cell 20 to acquire the temperature of the battery cell 20. The temperature acquisition terminal 132 is fixedly connected to the electric connector 12 to fix the temperature acquisition terminal 132 via the electric connector 12 to reduce the risk of the temperature acquisition terminal 132 wobbling. The temperature acquisition terminal 132 and the sampling plate 11 further form an electrical connection relationship at a fixed connection interface. The temperature acquisition terminal 132 may send the acquired temperature of the battery 100 to the sampling plate 11. The protective layer may be formed at the connection interface between the temperature acquisition terminal 132 and the sampling plate 11 through an adhesive dispensing process. The protective layer forms a seal at the connection interface between the temperature acquisition terminal 132 and the sampling plate 11 to prevent substances such as external air and water from contacting the connection interface between the temperature acquisition terminal 132 and the sampling plate 11, thereby reducing the risk of corrosion at the connection interface between the temperature acquisition terminal 132 and the sampling plate 11.

In the above technical solutions, the protective layer is provided at the connection interface between the temperature acquisition terminal 132 and the sampling plate 11, to reduce the risk of corrosion at the connection interface between the temperature acquisition terminal 132 and the sampling plate 11, and improve the reliability of the connection between the temperature acquisition terminal 132 and the sampling plate 11.

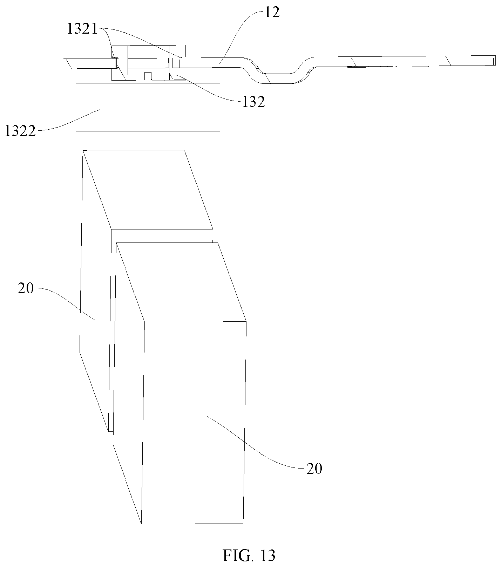

According to some embodiments of the present application, referring to FIG. 13, the temperature acquisition terminal 132 is snap-fitted with the electric connector 12.

A slot 1321 may be formed on one of the temperature acquisition terminal 132 and the electric connector 12, and the other one of the temperature acquisition terminal 132 and the electric connector 12 is adapted to be in a snap fit with the slot 1321, thereby allowing the temperature acquisition terminal 132 to be snap-fitted with the electric connector 12.

In the above technical solutions, the temperature acquisition terminal 132 and the electric connector 12 in a snap-fit connection are easy to assemble, to reduce the assembly difficulty of the temperature acquisition terminal 132 and improve the assembly efficiency of the temperature acquisition terminal 132.

According to some embodiments of the present application, referring to FIG. 13, the slot 1321 is formed on the temperature acquisition terminal 132, and the electric connector 12 is partially assembled in the slot 1321.

The slot 1321 of the temperature acquisition terminal 132 is adapted to be in a snap fit with the upper and lower sides of the electric connector 12 in the thickness direction, to improve the stability of the snap-fit of the temperature acquisition terminal 132 and the electric connector 12. In addition, the temperature acquisition terminal 132 is also adapted to be in heat conducting connection with the battery cell 20 via a heat conduction pad 1322 outside the slot 1321. The heat conduction pad 1322 can transfer heat from the battery cell 20 to the temperature acquisition terminal 132, thereby allowing the temperature acquisition terminal 132 to acquire the temperature of the battery cell 20.

In the above technical solutions, the electric connector 12 is partially assembled in the slot 1321 formed on the temperature acquisition terminal 132, to improve the stability of the snap-fit of the temperature acquisition terminal 132 and the electric connector 12. The temperature acquisition terminal 132 can also acquire the temperature of the battery cell 20 outside the slot 1321, to make the temperature acquisition terminal 132 compact in structure, space-saving, and easy to assemble.

According to some embodiments of the present application, referring to FIGs. 4 and 5, the mounting base film 2 is provided with a second clearance hole 24, the second clearance hole 24 extends through the mounting base film 2 in the stacking direction of the thermosetting adhesive layer and the base film material, and the second clearance hole 24 is configured to provide clearance for a post terminal of the battery cell 20.

The second clearance hole 24 may extend through the mounting base film 2 in the thickness direction of the mounting base film 2; that is, the second clearance hole 24 extends through both the base film material and the thermosetting adhesive layer. In the thickness direction of the mounting base film 2, the second clearance hole 24 may be in a one-to-one correspondence with the post terminal of the battery cell 20, and the post terminal of the battery cell 20 may pass through the second clearance hole 24, thereby allowing the electric connector 12 to be electrically connected to the post terminal. The electric connector 12 may connect post terminals of two adjacent battery cells 20, thereby enabling the electrical connection between the two battery cells 20.

In the above technical solutions, the mounting base film 2 is provided with the post terminal configured to provide clearance for the battery cell 20, thereby allowing the electric connector 12 to be electrically connected to the post terminal.

According to some embodiments of the present application, referring to FIG. 7, the sampling plate 11 is connected to a connection terminal 14, and the connection terminal 14 is adapted to be plugged into an adapter.

The sampling plate 11 and the connection terminal 14 may be connected by crimping, welding, or the like. The connection terminal 14 is adapted to be plugged into the adapter. The adapter may be connected to a battery management system. The sampling plate 11 may transmit the information parameter of the battery cell 20 to the connection terminal 14. The connection terminal 14 transmits the information parameter of the battery cell 20 to the battery management system via the adapter, thereby allowing the battery management system to monitor the status of the battery cell 20. The connection terminal 14 and the adapter may be of a quick-plug structure. In some examples, the connection terminal 14 is a quick-plug male terminal, and the adapter is a quick-plug female terminal. The plug-in assembly between the connection terminal 14 and the adapter is convenient and reliable.

In the above technical solutions, the sampling plate 11 is connected to the connection terminal 14 adapted to be plugged into the adapter, and the sampling plate 11 can output the information parameter of the battery cell 20 to the outside via the connection terminal 14 and the adapter, thereby facilitating the communication between the sampling plate 11 and an external management system of the battery 100.

According to some embodiments of the present application, the material of the thermosetting adhesive layer includes an adhesive, a flame retardant, and a curing agent.

The adhesive is tacky, and the adhesive may be a polyurethane. The polyurethane has polarity, and the polyurethane may be bonded to polar substances such as the base film material, the electric connector 12, and the information acquisition terminal 13. The flame retardant may be a phosphorus-based flame retardant. In some examples, the flame retardant may be a phosphate ester, a phosphonate ester, or the like. The flame retardant can impart flame retardancy to flammable polymers. The curing agent may be an isocyanate. The curing agent can enable the adhesive to be cured after being cooled from a molten state, such that the thermosetting adhesive layer becomes difficult to adhere to other particles after being cured, and the thermosetting adhesive layer can remain in a non-tacky solid state even when reheated.

In the above technical solutions, the material of the thermosetting adhesive layer includes the adhesive, the flame retardant, and the curing agent. The thermosetting adhesive layer can enable a strong bonding between the base film material and the information sampling structure 1. The cured thermosetting adhesive layer is less likely to attract foreign matter such as particles, and has flame retardancy, thereby helping improve the reliability and safety of the thermosetting adhesive layer.

According to some embodiments of the present application, the present application further provides a battery 100. The battery includes: a battery cell 20 and an information acquisition assembly 10. The information acquisition assembly 10 is the information acquisition assembly 10 of the battery cell 20 according to the above embodiments, and the information sampling structure 1 is connected to the battery cell 20 to acquire the information parameter of the battery cell 20.

According to some embodiments of the present application, the present application further provides an electric device 1000. The electric device includes the battery 100 according to the above embodiments.

According to some embodiments of the present application, referring to FIGs. 3 to 11, the present application provides the information acquisition assembly 10. The information acquisition assembly 10 includes the information sampling structure 1 and the mounting base film 2. The mounting base film 2 includes the base film material and the thermosetting adhesive layer that are stacked. The information sampling structure 1 is disposed on the thermosetting adhesive layer of the mounting base film 2. The cured thermosetting adhesive layer is less likely to attract foreign matter such as particles, thereby reducing the risk of the foreign matter detaching from the thermosetting adhesive layer. The information sampling structure 1 includes the sampling plate 11, the electric connector 12, and the information acquisition terminal 13. The information acquisition terminal 13 includes the voltage acquisition terminal 131 and the temperature acquisition terminal 132. One end of the voltage acquisition terminal 131 may be welded to the sampling plate 11, and the other end of the voltage acquisition terminal 131 may be ultrasonically welded to the surface, facing the mounting base film 2, of the electric connector 12. After welding, the bottom is coated with the mounting base film 2. One end of the temperature acquisition terminal 132 may be fixedly connected to the sampling plate 11 by welding, adhesive dispensing may be performed at the connection interface between the temperature acquisition terminal 132 and the sampling plate 11 to form the protective layer, and the other end of the temperature acquisition terminal 132 may be snap-fitted with the electric connector 12 and be in contact with the battery cell 20 via the heat conduction pad 1322. The mounting base film 2 is provided with the hollow-through holes 21. Each hollow-through hole 21 can accommodate the expansion between battery cells 20, thereby reducing the risk of tearing of the mounting base film 2 when the battery cells 20 expand. The notch structure 22 is added at a contact interface between the mounting base film 2 and the sampling plate 11, thereby reducing the risk of the mounting base film 2 cutting the sampling plate 11 during assembly and vibration. The first clearance hole 23 is provided at a position of the mounting base film 2 corresponding to the deformable segment 1311 of the voltage acquisition terminal 131, such that the deformable segment 1311 of the voltage acquisition terminal 131 can accommodate dimensional changes caused by the expansion of the battery cell 20.

It should be noted that in the absence of conflicts, the embodiments and features in the embodiments in the present application may be combined with each other.

In the description of this specification, the description of reference terms "one embodiment", "some embodiments", "a schematic embodiment", "an example", "a specific example", "some examples", or the like means that a specific feature, structure, material, or characteristic described in connection with the embodiments or examples is included in at least one embodiment or example of the present application. In this specification, the schematic description of the above terms does not necessarily refer to the same embodiment or example. Moreover, the specific feature, structure, material, or characteristic described may be combined in a suitable manner in any one or more embodiments or examples.

Although the embodiments of the present application have been illustrated and described, it will be appreciated by those of ordinary skill in the art that various changes, modifications, replacements, and variations can be made to these embodiments without departing from the principle and purpose of the present application, and the scope of the present application is defined by the claims and equivalents thereof.

## Claims

1. An information acquisition assembly for a battery cell, comprising:
an information sampling structure, the information sampling structure being adapted to be connected to the battery cell to acquire an information parameter of the battery cell; and
a mounting base film, the mounting base film comprising a base film material and a thermosetting adhesive layer, the thermosetting adhesive layer and the base film material being stacked, and the information sampling structure being disposed on the thermosetting adhesive layer.

2. The information acquisition assembly for the battery cell according to claim 1, wherein the mounting base film is provided with hollow-through holes, and each hollow-through hole extends through the mounting base film in a stacking direction of the thermosetting adhesive layer and the base film material.

3. The information acquisition assembly for the battery cell according to claim 2, wherein a plurality of hollow-through holes are provided, and the plurality of hollow-through holes are located at different positions of the mounting base film, respectively.

4. The information acquisition assembly for the battery cell according to claim 2 or 3, wherein the hollow-through hole is configured as a strip-shaped structure.

5. The information acquisition assembly for the battery cell according to any one of claims 1 to 4, wherein the information sampling structure comprises: a sampling plate, an electric connector, and an information acquisition terminal, the sampling plate is disposed on the thermosetting adhesive layer, the sampling plate and the electric connector are located on a same side of the mounting base film, the electric connector is configured to electrically connect two battery cells, and the information acquisition terminal is connected between the sampling plate and the electric connector.

6. The information acquisition assembly for the battery cell according to claim 5, wherein a notch structure is formed at an edge of the mounting base film, and the notch structure corresponds to an edge of the sampling plate.

7. The information acquisition assembly for the battery cell according to claim 5 or 6, wherein the information acquisition terminal comprises: a voltage acquisition terminal, the voltage acquisition terminal is fixedly connected to the sampling plate, and the voltage acquisition terminal is fixedly connected to a surface, facing the mounting base film, of the electric connector.

8. The information acquisition assembly for the battery cell according to claim 7, wherein the voltage acquisition terminal is fixedly connected to a surface, facing the mounting base film, of the sampling plate.

9. The information acquisition assembly for the battery cell according to claim 7 or 8, wherein the voltage acquisition terminal is provided with a deformable segment, the mounting base film is provided with a first clearance hole, the first clearance hole extends through the mounting base film in the stacking direction of the thermosetting adhesive layer and the base film material, and the first clearance hole is disposed corresponding to the deformable segment.

10. The information acquisition assembly for the battery cell according to claim 9, wherein the voltage acquisition terminal is further provided with a first fixing part and a second fixing part, the first fixing part is fixedly connected to the sampling plate, the second fixing part is fixedly connected to the electric connector, and the deformable segment is connected between the first fixing part and the second fixing part.

11. The information acquisition assembly for the battery cell according to claim 10, wherein the deformable segment comprises: a first segment body, a second segment body, and a third segment body, two ends of the second segment body are connected to the first segment body and the third segment body, respectively, the first segment body is connected between the first fixing part and the second segment body, the third segment body is connected between the second fixing part and the second segment body, and at least two of the first segment body, the second segment body, and the third segment body are parallel to each other.

12. The information acquisition assembly for the battery cell according to claim 10 or 11, wherein the deformable segment comprises: a first segment body, a second segment body, and a third segment body, two ends of the second segment body are connected to the first segment body and the third segment body, respectively, the first segment body is connected between the first fixing part and the second segment body, the third segment body is connected between the second fixing part and the second segment body, an included angle is formed between the second segment body and the first segment body, and/or an included angle is formed between the second segment body and the third segment body.

13. The information acquisition assembly for the battery cell according to any one of claims 5 to 12, wherein the information acquisition terminal comprises: a temperature acquisition terminal, the temperature acquisition terminal is fixedly connected to both the sampling plate and the electric connector, the temperature acquisition terminal is configured to acquire a temperature of the battery cell, and a protective layer is provided at a connection interface between the temperature acquisition terminal and the sampling plate.

14. The information acquisition assembly for the battery cell according to claim 13, wherein the temperature acquisition terminal is snap-fitted with the electric connector.

15. The information acquisition assembly for the battery cell according to claim 14, wherein a slot is formed on the temperature acquisition terminal, and the electric connector is partially assembled in the slot.

16. The information acquisition assembly for the battery cell according to any one of claims 1 to 15, wherein the mounting base film is provided with a second clearance hole, the second clearance hole extends through the mounting base film in a stacking direction of the thermosetting adhesive layer and the base film material, and the second clearance hole is configured to provide clearance for a post terminal of the battery cell.

17. The information acquisition assembly for the battery cell according to any one of claims 1 to 16, wherein the sampling plate is connected to a connection terminal, and the connection terminal is adapted to be plugged into an adapter.

18. The information acquisition assembly for the battery cell according to any one of claims 1 to 17, wherein a material of the thermosetting adhesive layer comprises an adhesive, a flame retardant, and a curing agent.

19. A battery, comprising:
a battery cell; and
an information acquisition assembly, the information acquisition assembly being the information acquisition assembly for the battery cell according to any one of claims 1 to 18, and the information sampling structure being connected to the battery cell to acquire an information parameter of the battery cell.

20. An electric device, comprising the battery according to claim 19.
